# EUROPEAN PATENT APPLICATION

(11) **EP 1 795 718 A1**
(43) Date of publication of application: **13.06.2007**
(21) Application number: 05768657.8
(22) Date of filing: 02.08.2005
(51) Int. Cl.: F01L 13/00, F01L 1/34

(54) **VARIABLE VALVE DRIVE DEVICE, ENGINE, AND MOTORCYCLE**

(30) Priority: 15.09.2004 JP 2004268892
(71) Applicant: YAMAHA HATSUDOKI KABUSHIKI KAISHA, Iwata-shi, Shizuoka 438-8501 (JP)
(72) Inventor: TSUCHIDA, Naoki C/O YAMAHA HATSUDOKI KK, Iwata-shi, Shizuoka 4388501 (JP); MORIKAWA, Takeshi C/O YAMAHA HATSUDOKI KK, Iwata-shi, Shizuoka 4388501 (JP)
(74) Representative: Grünecker, Kinkeldey, Stockmair & Schwanhäusser Anwaltssozietät
(86) International application number: PCT/JP2005/014087
(87) International publication number: WO 2006/030587

(57) **Abstract**

A cam sprocket 211 is driven to rotate by the drive force transmitted from a crankshaft 130 to by turn drive an eccentric plate 250 around an axis running in parallel with the axis of rotation of the cam sprocket 211. The eccentric plate 250 is movable from a position concentric with the cam sprocket 211 to an eccentric position. As it is driven to rotate at the eccentric position, it drives an intake cam block 240 by way of a variable camshaft 230 with a rotary phase difference that changes periodically relative to the cam sprocket 211. The intake cam block 240 drives an intake valve. The phase angle of the eccentric plate 250 at the connection section with the cam sprocket 211 and at the connection section with the movable camshaft 230 is s defined to be between 80° and 160° or between 200° and 290° when the direction in which the eccentric plate 250 rotates is assumed to be the forward direction.

## Description

### Technical Field

This invention relates to a variable valve drive device to be fitted to an engine, an engine and a motorcycle.

### Background Art

In four-cycle engines, a high power output, a low fuel consumption rate and a low exhaust emission rate are achieved conventionally by differentiating the period when the intake valve and the exhaust valve are opened simultaneously (valve overlap) between high speed revolutions and low and medium speed revolutions of the engine.

Variable valve timing mechanisms are known as mechanisms for differentiating the amount of valve overlap as a function of revolutions of the engine. The variable valve timing mechanism shifts the timing of opening each of the valves and that of closing each of the valves as a function of the number of revolutions per unit time of the engine.

A technique of making the angle of action (duration of action, also referred to as angle of actuation) of the cam variable by arranging a coupling (eccentric member) for changing the angular velocity between the cam drive shaft part and the camshaft part of the variable valve timing mechanism is known.

For example, according to Patent Document 1, a cam drive shaft adapted to be driven to rotate at a predetermined speed of revolution in synchronism with a rotating crank is made to run through a cam and a disk-shaped eccentric plate (eccentric member) while a pin arranged at the cam drive shaft is loosely engaged with a groove extending in a radial direction of the eccentric plate. The eccentric plate is provided with the groove that is loosely engaged with the pin of the cam drive shaft and also with another groove that is extending in a radial direction, the center position of the eccentric plate being interposed between the two grooves. The another groove is loosely engaged with a pin arranged at the cam side. Thus, the eccentric plate is driven to rotate by the rotary motion of the cam drive shaft by way of the pins and the grooves eccentrically relative to the cam drive shaft so as to by turn drive the cam to rotate.

According to Patent Document 2, an eccentric plate (eccentric member) is arranged between a sprocket that is adapted to be driven by the drive force of a crank shat transmitted by way a gear train and a camshaft integrally provided with a cam. The eccentric plate is equipped with grooves that extend in a radial direction and are arranged with the axis of rotation of the camshaft interposed between them. The grooves are loosely engaged with a pin arranged at the sprocket and a pin arranged on the camshaft in such a way that the pins can slide in the respective grooves. Thus, the drive force of the cam drive shaft is transmitted to the camshaft by way of the eccentric plate having the above-described configuration.

Thus, according to either of the Patent Documents 1 and 2, an eccentric plate (eccentric member) is driven to rotate around a fixed point on the engine where the variable valve timing mechanism itself is mounted. Additionally, according to either of the Patent Documents 1 and 2, both the input contact parts (pins and grooves) of the eccentric plate for inputting drive force from the cam drive shaft and the output contact parts (pins and grooves) of the eccentric plate for outputting drive force to the cam side show a rotational phase of 180° relative to the center of the eccentric plate. Therefore, the trajectory of the center position of the eccentric place (fixed point on the engine) is substantially a straight line if both the variable timing of opening the valve and that of closing the valve are made invariable.

According to either of the Patent Documents 1 and 2, the center position of the eccentric plate is structurally fixed to a point on the engine and the eccentric cam is driven to rotate around that point. Therefore, the trajectory of the center position of the eccentric plate is an arc when the variable valve timing mechanism is driven to operate. Thus, with either of the structures according to the Patent Documents 1 and 2, the timing of closing the valve is shifted significantly when the timing of opening the valve is changed in an operation of shifting the center position of the eccentric plate to give rise to a problem of a very limited scope of freedom of selecting optimum timings for the valve.

Patent Document 3 provides a known technique for securing a broad scope of freedom of selecting timings for the valve for a structure basically similar to that of the Patent Document 1.

According to the Patent Document 3, there is provided a structure where the center of an eccentric plate that is arranged between a cam drive shaft and a cam as coupling for changing the angular velocity is moved two-dimensionally in directions orthogonal to the cam drive shaft. With this arrangement, according to the Patent Document 3, it is possible to shift the center of the eccentric plate, or the center of eccentricity, to an arbitrarily selected position. Then, it is possible to select an optimum timing for opening the valve and also an optimum timing for closing the valve according to the output power for a required specific number of revolutions per unit time of the engine, a required specific fuel consumption rate and so on.
Patent Document 1: Jpn. Pat. Publication No. 47-020654
Patent Document 2: Jpn. Pat. Appln. Laid-Open Publication No. 3-43611
Patent Document 3: Jpn. Pat. Appln. Laid-Open Publication No. 5-118208
However, according to the Patent Document 3, two actuators are required to shift the eccentric plate. Then, as a result, the eccentric plate is driven to move by means of two drive systems. Thus, a complex mechanism is required and the mechanism itself needs to be controlled in a complex manner according to the Patent Document 3. Consequently, the complex structure and the complex control operation entail a problem of high cost, low capability of maintenance and low reliability.

In view of the above-identified problems of the prior art, it is therefore the object of the present invention to provide a variable valve drive device to be fitted to an engine having a simple structure that can be manufactured at low cost and allowing to select an optimum timing for both opening and closing a valve by making the angle of action of a cam variable, an engine equipped with such a variable valve drive device and a motorcycle equipped with such an engine.

### Disclosure of the Invention

According to the present invention, there is provided a variable valve drive device, comprising: a cam drive member adapted to be driven to rotate by the drive force transmitted from a crankshaft; an eccentric member adapted to be driven to rotate around an axis of rotation running in a direction same as the rotary shaft of the cam drive member by operation of the cam drive member, the axis being movable from a concentric position on the rotary shaft to an eccentric position; a camshaft arranged concentrically on the rotary shaft and adapted to be driven to rotate around the rotary shaft by the eccentric member with a rotary phase difference changing periodically relative to the cam drive member when it is driven by the eccentric member at the eccentric position; and a cam block adapted to be driven to rotate by the camshaft with a rotational phase same with the camshaft and drive an exhaust valve or an intake valve, the eccentric member includes: an input connection section connected to the cam drive member to receive as input the rotary force of the cam drive member; and an output connection section connected to the camshaft to output the rotary force of the eccentric member itself driven to rotate by the rotary force input by way of the input connection section, the timing of opening the exhaust valve or the intake valve as a function of the shift of the axis of rotation of the eccentric member in a direction being angularly unequivocally advanced and/or the timing of closing the exhaust valve or the intake valve being angularly unequivocally delayed for the phase angle of the input connection section and that of the output connection section relative to the axis of the eccentric member.

### Brief Description of the Drawings

FIG. 1 is a schematic perspective view of a principal part of an engine equipped with a variable valve drive device according to an embodiment of the present invention;
FIG. 2 is a schematic cross sectional view of a principal part of the variable valve drive device of FIG. 1;
FIG. 3 is an exploded schematic perspective view of the variable valve drive device of FIG. 1;
FIG. 4 is a schematic plan view of an exemplary eccentric plate that can be used for the variable valve drive device of FIG. 1;
FIG. 5 is an exploded schematic perspective view of the eccentric boss of the variable valve drive device of FIG. 1;
FIGS. 6A and 6B are schematic illustrations of the positional relationship of the axis of rotation of the eccentric boss, the axis of the variable cam drive shaft and the axis of the eccentric plate;
FIG. 7 is an exemplary illustration of the positional relationship of the drive pin and the driven pin when the eccentric plate is eccentrically positioned relative to the camshaft of the variable valve drive device of FIG. 1;
FIG. 8 is a schematic illustration of the relationship of the timing of opening, the timing of closing the intake valve and the eccentric slot phase angle of the eccentric plate in the structure of the variable valve drive device of FIG. 1;
FIG. 9 is another schematic illustration of the relationship of the timing of opening, the timing of closing the intake valve and the eccentric slot phase angle of the eccentric plate in the structure of the variable valve drive device of FIG. 1;
FIG. 10 is a graph illustrating the relationship of the amount of overlap and the idling stability of an ordinary engine;
FIGS. 11A and 11B are schematic illustrations of the axis of rotation located at the center of the eccentric plate and the amount of discrepancy of the radius of gyration thereof;
FIG. 12 is a schematic lateral cross sectional view of a motorcycle equipped with a variable valve drive device of an engine according to an embodiment of the present invention, showing a principal configuration thereof; and
FIG. 13 is a schematic plan view of a principal part of the drive unit of FIG. 12.

### Best Mode for Carrying Out the Invention

Now, the present invention will be described in greater detail by referring to the accompanying drawings that illustrate preferred embodiments of the invention.

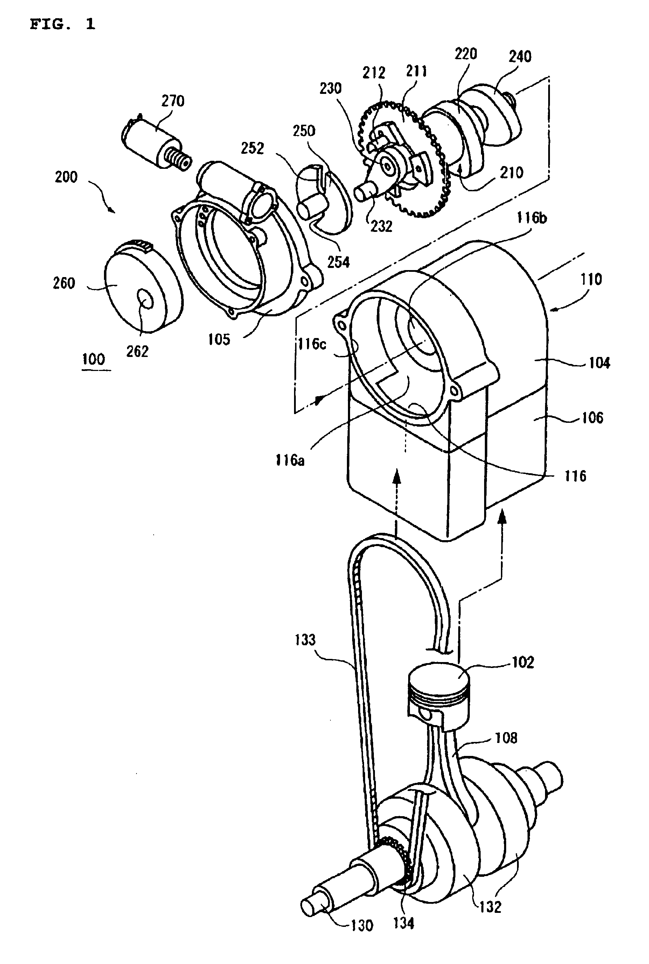

FIG. 1 is a schematic exploded perspective view of a principal part of an engine equipped with a variable valve drive device according to an embodiment of the present invention.

The engine 100 shown in FIG. 1 comprises an engine main body section 110 that includes a cylinder section 106 and a cylinder head 104 for containing a piston 102 arranged in the inside thereof, a crankshaft 130 contained in a crank case (not shown) and a variable valve drive device 200.

In the engine 100, the variable valve drive device 200 is arranged substantially in parallel with the crankshaft 130. The variable valve drive device 200 produces a periodic phase difference between the revolutions of the exhaust cam block 220 and those of the intake cam block 240 to make the valve timing of opening and closing the exhaust valve and that of opening a closing the intake valve variable according to the revolutions of the exhaust cam block 220 and those of the intake cam block 240 respectively. Then, as a result, the valve overlap of the engine 100 varies according to the number of revolutions per unit time of the engine.

In the following description of the embodiment, it is assumed that the engine 100 is an SOHC (single over head camshaft) type engine to be mounted on a scooter type motorcycle, although the present invention is by no means limited thereto and it may be any engine so long as it is equipped with a variable valve drive device 200.

As shown in FIG. 1, the piston 102 in the cylinder section 106 is freely movable back and forth in the direction of the cylinder shaft (vertically) and connected at the base end side thereof to a crankshaft 130 by way of the small end of a con-rod 108. The large end of the con-rod 108 is rotatably fitted to a crank pin (not shown) arranged between crank webs 132, which by turn are fitted to the crankshaft 130. With this arrangement, the piston 102 moves back and forth in the cylinder section 106 as the crankshaft 130 is driven to rotate.

A timing gear 134 is arranged on the crankshaft 130 adjacent to one of the crank webs 132 (crank journal to be more specific). A cam drive chain 133 is wound around the timing gear 134 to operate as drive force transmission member. The cam drive chain 133 is also wound around the cam sprocket 211 arranged in the cylinder head 104 of the engine main body section 110 along with the timing gear 134 to transmit rotary drive force to the cam blocks 220, 240 of the variable valve drive device 200. While a cam drive chain 133 is used as drive force transmission member in the above description, the present invention is by no means limited thereto and any equivalent member may alternatively be used to transmit drive force from the crankshaft 130 to the cam sprocket 211. For example, the cam drive chain 133 may be replaced by a cog belt. Then, the timing gear and the cam sprocket 211 are replaced by a cog wheel.

The transmission line of the cam drive chain 133 (the chain line in this embodiment) is arranged substantially orthogonal relative to the crankshaft 130 at a position close to the cylinder shaft of the cylinder section 106 in the inside of which the piston 102 moves back and forth. This arrangement is selected from the viewpoint of the engine structure in order to prevent the tensile force applied to the cam drive chain 133 from increasing as a function of the distance between the crank section for driving the piston 102 and the cam drive chain 133 to by turn increase the bending stress applied to the crank itself.

The cam drive chain 133 is arranged in a chain case section 116, which is provided integrally with and arranged adjacent to the cylinder section 106 of the engine main body section 110. An upper part 116a of the chain case 116 (to be referred to as "case upper section" hereinafter) is arranged integrally with the cylinder head 104. The case upper section 116a of the cylinder head 104 has openings whose axis runs in parallel with the crankshaft.

Of the openings, the opening 116b of the case upper section 116a communicates with the upper space of the cylinder section 106, whereas an annular cylinder head cover (to be referred to as "head cover" hereinafter) 105 is fitted to the case upper section 116a at the other opening 116c. One of the sides of the variable valve drive device 200 is disposed in the annular head cover 105 so that the variable valve drive device 200 is supported by the head cover 105 at this side.

The variable valve drive device 200 comprises a cam sprocket 211, an exhaust cam block 220, a variable camshaft 230, an intake cam block 240, an eccentric plate (eccentric member) 250, an eccentric boss (member moving section) 260 and an eccentricity motor 270. The variable valve drive device 200 is fitted to the cylinder head 104 in parallel with the crankshaft 130. Note that the variable valve drive device 200 changes one of the valve timings of the valves, which including the intake valve and the exhaust valve, relative to the other valve to make the amount of valve overlap variable. More specifically, in the following description, it is assumed that the variable valve drive device 200 changes the timing of opening the intake valve and that of closing the intake valve by means of the intake cam block 240 to make the valve overlap variable relative to the exhaust valve.

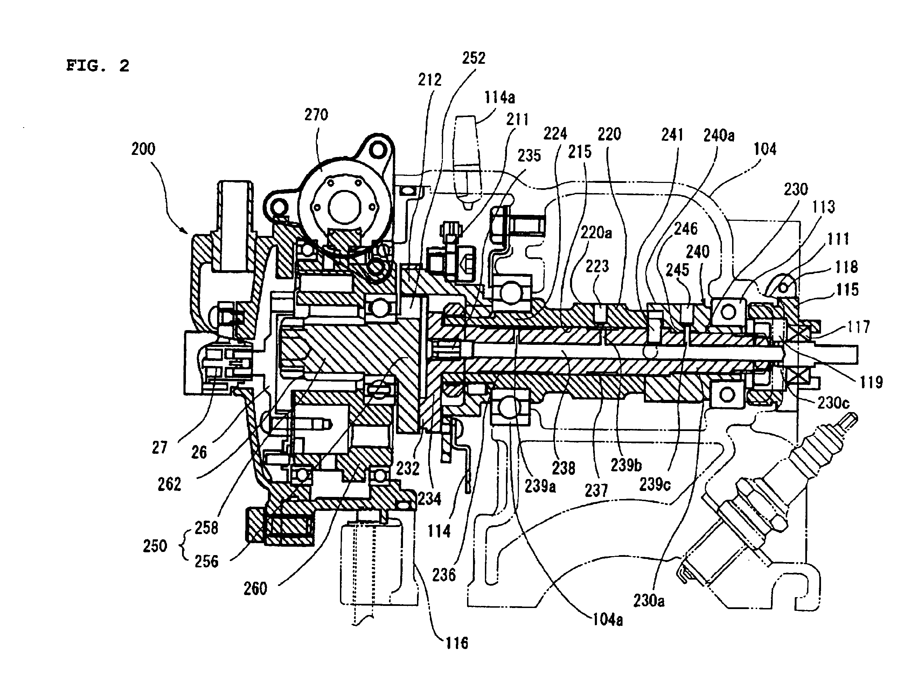

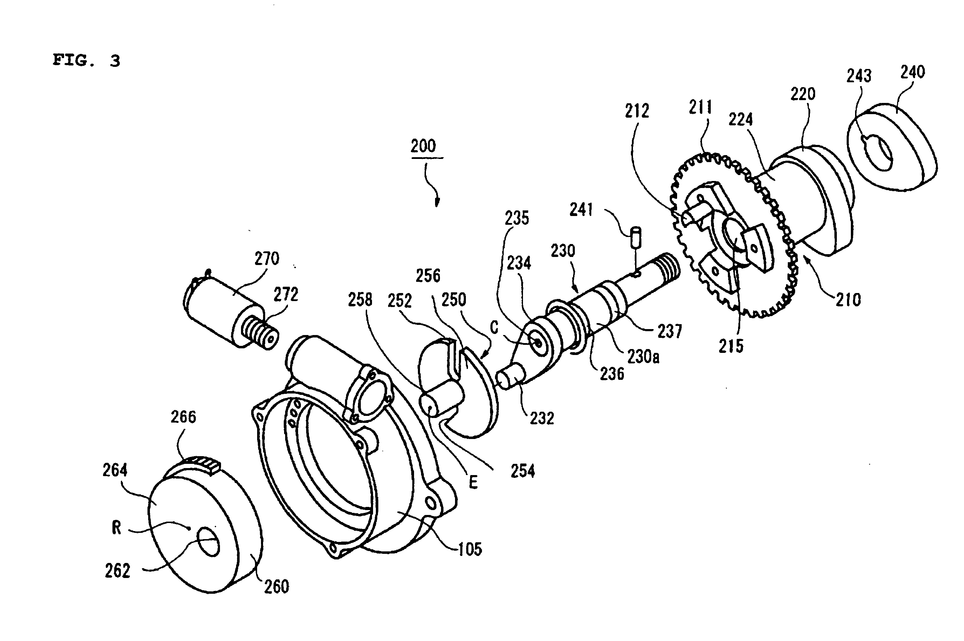

FIG. 2 is a schematic cross sectional view of a principal part of the variable valve drive device 200 fitted to the cylinder head 104 and FIG. 3 is an exploded schematic perspective view of the variable valve drive device 200.

In the variable valve drive device 200, the axes of revolution of the cam sprocket 211, the exhaust cam block 220, the variable camshaft 230, the intake cam block 240, the eccentric plate 250 and the eccentric boss 260 run in parallel with each other.

As shown in FIGS. 1 through 3, the intake cam block 240 and the exhaust cam block 220 are arranged in the upper part of the cylinder section 106 in the cylinder head 104 with the variable camshaft 230 running through them in the variable valve drive device 200. The variable camshaft 230 is driven to run through the cam sprocket 211 and the cam sprocket 211 and the eccentric plate 250 are arranged in the case upper section 116a.

The eccentric boss 260 is rotatably fitted to the inside of the annular head cover 105, which head cover 105 is rigidly secured to the cylinder head 104. Thus, as a result, the variable valve drive device 200 is rigidly secured to the cylinder head 104. The opening of the cylinder head 104 where the head cover 105, in which the eccentric boss 260 is fitted, is arranged has a diameter that allows the cam sprocket 211 to pass through.

As shown in FIGS. 1 through 3, the cam sprocket 211 is integrally formed with the exhaust cam block 220 by way of the a cylindrical part 224, the exhaust cam block 220 being concentric with the cam sprocket 211 and adapted to be driven to rotate so as to open and close the valve (the exhaust valve in this instance). Thus, the cam sprocket 211, the cylindrical part 224 and the exhaust cam block 220 constitute a cam drive member 210 that is directly subjected to the drive force of the crankshaft 130 to rotate.

The cam sprocket 211 follows the driving motion of the crankshaft 130 by way of the timing gear 134 (see FIG. 1) and the cam drive chain 133 (see FIG. 1) and rotates at a predetermined reduction ratio relative to the number of revolutions per unit time of the crankshaft 130. In this instance, the cam sprocket 211 rotates at a rate of 1/2 of the number of revolutions per unit time of the crankshaft 130.

The axis of the cam sprocket 211 and the exhaust cam block 220 agrees with the axis of the camshaft, which axis runs in parallel with the crankshaft 130 in the upper part of the cylinder section 106 (see FIG. 1).

Also as shown in FIGS. 1 through 3, the cam sprocket 211 is equipped with a drive pin 212 that runs in parallel with the axis of rotation of the cam sprocket 211 and projects toward the side opposite to the exhaust cam block 220 to drive the eccentric plate 250 to rotate. The drive pin 212 is loosely engaged with slot 252 formed by notching the eccentric plate 250 in a radial direction down to the center thereof.

The axis of the drive pin 212 is eccentric relative to the axis of the cam sprocket 211 so that, as the cam sprocket 211 rotates, it turns around the axis of the cam sprocket 211 to drive the eccentric plate 250 to rotate by way of the slot 252, the axis of rotation of the drive pin 212 and that of the eccentric plate 250 running in parallel with each other. Note that the cam sprocket 211 is equipped with a radial projecting piece 114.

The rotary position of the projecting piece 114 is detected by a sensor 114a fitted to the cylinder head 104.

Since the drive force of the crankshaft 130 is directly transmitted to the cam sprocket 211 by way of the cam drive chain 133 (see FIG. 1), the rotary position of the cam sprocket 211 is interlocked with the stroke of the crank. In other words, the rotary position includes information on the stroke of the crank (the intake stroke, the compression stroke, the explosion stroke and the exhaust stroke in the case of a 4-cycle engine). Therefore, it is possible to determine the stroke of the crank as the sensor 114a detects the position of the projecting piece 114 of the cam sprocket 211.

The cam sprocket 211, the exhaust cam block 220 and the cylindrical part 224 are provided at the respective axial positions with an axial through hole 215. In other words, the cam drive member 210 is provided with an axial through hole 215. The through hole 215 communicates with hole section 223 that is open to the base circle surface 220a of the exhaust cam block 220 (see FIG. 2).

The shaft part 230a of the variable camshaft 230 is rotatably received in the through hole 215 so as to run in the axial direction.

The shaft part 230a of the variable camshaft 230 projects from the cam drive member 210 that receives it at axially opposite sides thereof and the intake cam block 240, which is located adjacent to the exhaust cam block 220, is integrally fitted to the part of the shaft part 230a that projects at the side of the exhaust cam block 220.

A driven pin 232 is arranged at the part of the shaft part 230a of the variable camshaft 230 that projects at the side of the cam sprocket 211 of the cam drive member 210.

The variable camshaft 230 is arranged in such a way that it runs all the way above the cylinder section 106 when it is received in the cam drive member 210. The variable camshaft 230 is rotatably supported by bearings 104a and 113 (see FIG. 2).

The variable camshaft 230 has a through hole 238 running in the axial direction in the shaft part 230a. The through hole 238 operates as a main body oil channel (main lubrication channel) for the lubricating oil supplied to the sliding parts of the members of the variable valve drive device 200. In the following description, the through hole 238 will be referred to as main body oil channel 238.

To be more specific, the main body oil channel 238 runs through the rotary shaft of the cam drive member 210 (particularly, the cam sprocket 211) to supply lubricating oil to the sliding part of the intake cam block 240 at the side of one of the opposite ends of the cam drive member 210. The main body oil channel 238 also supplies lubricating oil to the sliding part of the eccentric plate 250 at the side of the other opposite end of the cam drive member 210.

The main body oil channel 238 communicates with the outer peripheral surface of the shaft part 230a by way of branched lubricant path 239a, 239b, 239c and is open at the side of one of the opposite end facets of the shaft part 230a by way of a throttle 235 arranged at the chain line side of the shaft part 230a (at the side of the eccentric plate 250).

The branched lubricant path 239a, 239b, 239c are formed in the shaft part 230a so as to run orthogonally from the main body oil channel 238 and have respective openings at the outer surface of the shaft part 230a. The shaft part 230a is provided with lubricant-pooling grooves 236, 237 that are circumferential recesses on the outer surface thereof formed for the branched lubricant path 239a, 239b respectively. Thus, the branched lubricant path 239a, 239b communicate with the lubricant-pooling grooves 236, 237 respectively.

The lubricant-pooling grooves 236, 237 are formed in areas of the outer surface of the shaft part 230a that contact with and slide on the inner peripheral surface of the cylindrical part 224 and that of the exhaust cam block 220 that are defined by the periphery of the through hole 215. Thus, the inner peripheral surface of the cylindrical part 224 and that of the exhaust cam block 220 are lubricated by the lubricating oil guided by the branched lubricant path 239a, 239b. The branched lubricant path 239c is formed in the shaft part 230a so as to run orthogonally from the main body oil channel 238 and open at the outer surface of the intake cam block 240 by way of a hole section 245.

With the above-described arrangement, the lubricating oil guided by the branch oil channel 239c is supplied to the sliding part of the shaft part 230a and the corresponding sliding part of the intake cam block 240 to lubricate those parts. An lubricant-pooling groove 246 is also formed on the inner peripheral surface of the intake cam block 240 at the opening thereof in the area where the intake cam block 240 slides on the outer peripheral surface of the shaft part 230a.

The variable camshaft 230 is received at one of the opposite ends thereof by a bearing 113 fitted to the cylinder head 104. The part of the variable camshaft 230 that projects from the bearing 113 is covered by an oil seal cap 115 by way of an oil seal section 117 so that no lubricating oil may not leak to the outside of the cylinder head 104 due to the oil seal section 117.

The ejection port 118 of an oil pump is fitted to the cylinder head 104. Thus, lubricating oil is flown into an oil pool 119 that communicates with the opening 230c at one of the opposite ends of the shaft part 230a by way of the ejection port 118 and then guided into the main body oil channel 238 by way of the oil pool 119.

The intake cam block 240 is rigidly secured in position as it is put on the shaft part 230a at one of the ends and the pin 241 is brought into engagement with a notched section 243 formed in the intake cam block 240 (see FIG. 3). Note that the intake cam block 240 is arranged above the cylinder section along with the exhaust cam block 220.

As the variable camshaft 230 is driven to rotate around the axis thereof, the intake cam block 240 is also driven to rotate around the same axis. As shown in FIG. 2, the intake cam block 240 is provided with the hole section 245 that runs through the base circular surface 240a thereof and the inner surface thereof that surrounds one of the opposite ends of the shaft part 230a. Note that the hole section 245 communicates with the main body oil channel 238 in the inside of the shaft part 230a.

With the above-described arrangement, as lubricating oil is ejected from the ejection port 118, it is supplied to the sliding sections and the profiled sections of the intake cam block 240 and the exhaust cam block 220 by way of the branched lubricant path 239c, 239b, 239a.

A plate 234 is fitted to the other end of the shaft part 230a so as to project orthogonally relative to the axis of the shaft part 230a. The plate 234 rotates at a position adjacent to the cam sprocket 211 as the shaft part 230a is driven to rotate.

A driven pin 232 is arranged at the front end of the plate 234 so as to project in the direction opposite to the direction in which the shaft part 230a extends (see FIGS. 1 through 3).

More specifically, the driven pin 232 is arranged at a position located opposite to the drive pin 212 with the shaft part 230a interposed between them and eccentric relative to the axis of the shaft part 230a and extends in parallel with the shaft part 230a.

The driven pin 232 is loosely engaged with the slot 254 formed by notching the eccentric plate 250 in a radial direction down to the center thereof so that it turns around the axis of the shaft part 230a as the eccentric plate 250 rotates. More specifically, as the eccentric plate 250 is driven to rotate by the drive pin 212 that rotates with the cam sprocket 211, the variable camshaft 230 is driven to follow the rotary motion of the eccentric plate 250 by way of the driven pin 232 so that the intake cam block 240 is also driven to rotate.

The eccentric plate 250 receives the drive force of the drive pin 212 as input by way of the slot 252 that is loosely engaged with the drive pin 212 and outputs the drive force to the driven pin 232 by way of the slot 254 that is loosely engaged with the driven pin 232. Therefore, the slot 252 will be referred to as input side slot (drive slot) and the slot 254 will be referred to as output side slot (driven slot) hereinafter.

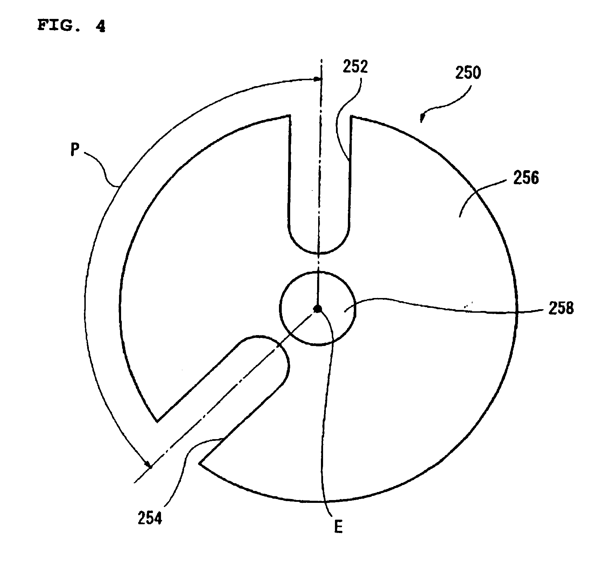

FIG. 4 is a schematic plan view of an exemplary eccentric plate that can be used for this embodiment of variable valve drive device.

The eccentric plate 250 shown in FIGS. 1 through 4 has a plate-shaped (disk-shaped in this instance) plate main body section 256 arranged vis-à-vis the plate 234 of the variable camshaft 230 and a plate shaft section 258 that projects perpendicularly from the center of the plate main body section 256 to the side opposite to the plate 234.

The plate main body section 256 is provided with the input side slot 252 and the output side slot 254 that extend in respective radial directions with the plate shaft section 258 interposed between them.

The input side slot 252 and the output side slot 254 are formed in the plate main body section 256 to show a predetermined open angle P relative to the axis of the plate shaft section 258 (see FIG. 4).

The predetermined open angle P is defined to be between 80° and 160° or between 200° and 290° relative to the axis of the plate shaft section 258 when the direction in which the cam sprocket 211 rotates is assumed to be the forward direction.

The input side slot 252 and the output side slot 254 are loosely engaged with the drive pin 212 and the driven pin 232 respectively. Thus, the above predetermined open angle P is the phase angle of the drive pin 212 and the driven pin 232 so that a phase angle difference that is equal to the open angle P is produced between the cam sprocket 211 and the exhaust cam block 220 and the intake cam block 240 that are driven to rotate respectively by way of the drive pin 212 and the driven pin 232. The open angle P is the phase angle difference between the exhaust cam block 220 and the intake cam block 240. In the following description, the open angle P will be referred to as eccentric slot phase angle P in view of its function.

As shown in FIG. 3, the plate shaft section 258 that operates as the rotary shaft of the eccentric plate 250 having the above-described configuration is rotatably put into the eccentric hole 262 formed in the eccentric boss 260.

The eccentric boss 260 includes a boss main body section 264 that rotates around an axis of rotation (axis of rotation R shown in FIG. 3) running in parallel with the direction of the camshaft in the inside of the head cover 105. The eccentric boss main body 264 has an outer diameter smaller than the outer diameter of the cam sprocket 211 and the eccentric boss 260 is arranged at a position that overlaps the cam sprocket 211 in the direction of the axis of rotation. The eccentric hole 262 of the eccentric boss 260 is arranged at a position eccentric relative to the axis of rotation of the boss main body section 264.

A rack 266 is formed at a part of the outer periphery of the boss main body section 264. The rack 266 is engaged with the worm gear 272 of the eccentricity motor 270 fitted to the head cover 105. With this arrangement, the eccentric boss 260 is driven to rotate around the axis of rotation R (see FIG. 3) by the eccentricity motor 270 in the inside of the head cover 105.

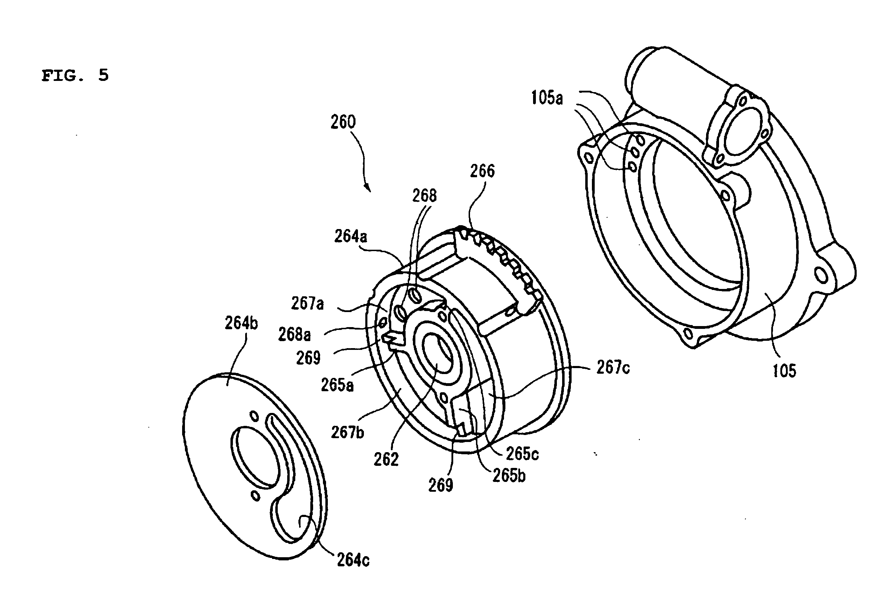

FIG. 5 is an exploded perspective view of the eccentric boss.

As shown in FIG. 5, the boss main body section 264 of the eccentric boss 260 is a bottomed hollow cylinder that includes a main body case 264a having an eccentric hole 262 formed in the inside and a lid section 264b fitted thereto.

The main body case 264a is provided with cells 267a, 267b, 267c that are arranged around the eccentric hole 262 and divided by partition walls 265a, 265b, 265c.

The cell 267a is provided at the bottom section thereof with air holes 268 that keep the cells 267 in communication with the rear surface side of the eccentric boss, or the side of the eccentric plate 250. Additionally, the cell 267a is provided at the peripheral wall thereof with an oil return hole 268a that communicates with the outside of the boss main body section 264.

The cells 265a, 265b are provided with notches 269 that keep the cells 267a and 267b and the cells 267b and 267c in communication with each other.

The closure section 264b covers the cells 267a, 267b, 267c. The closure section 264b has an opening 264c in an area thereof that operates as ceiling of the cell 267c.

Thus, the eccentric boss 260 communicates with the outside in the axial direction, or at the front side and the rear side, by way of the air holes 268, the cells 267a, 267b, 267c, the notches 269 and the opening 264c. In other words, the eccentric boss 260 is provided in the inside thereof with cells 267a, 267b, 267c that are hollow sections communicating with the outside in the direction of the axis of rotation of the cam sprocket 211. With this arrangement, the eccentric boss 260 keeps the inside and the outside of the cylinder head 104 in communication with each other when it is fitted to the cylinder head 104 by way of the head cover 105.

An oil return hole 105a is formed in the inside of the head cover 105 so as to run in parallel with the axis of rotation of the eccentric boss 260. With this arrangement, when lubricating oil flows into the eccentric boss 260 from the side of the eccentric plate 250, it is returned to the inside of the engine 100 by way of both the oil return hole 105a and the oil return hole 268a communicating with the inside of the cell 267a. In short, the cells 267a, 267b, 267c operate as breather chamber (?) for preventing the lubricating oil in the blow-by gas produced in the inside of the engine 100 from being discharged to the outside of the engine 100.

As the eccentric boss 260 having the above-described configuration is driven to rotate, the position of the eccentric hole 262 can be moved to an eccentric position relative to the axis of rotation R of the boss main body section 264. In other words, the eccentric boss 260 can move the plate shaft section 252 of the eccentric plate 250 arranged adjacent to the eccentric plate 250 at the side opposite to the cam sprocket 211 from a concentric position to an eccentric position relative to the axis of rotation of the cam sprocket 211.

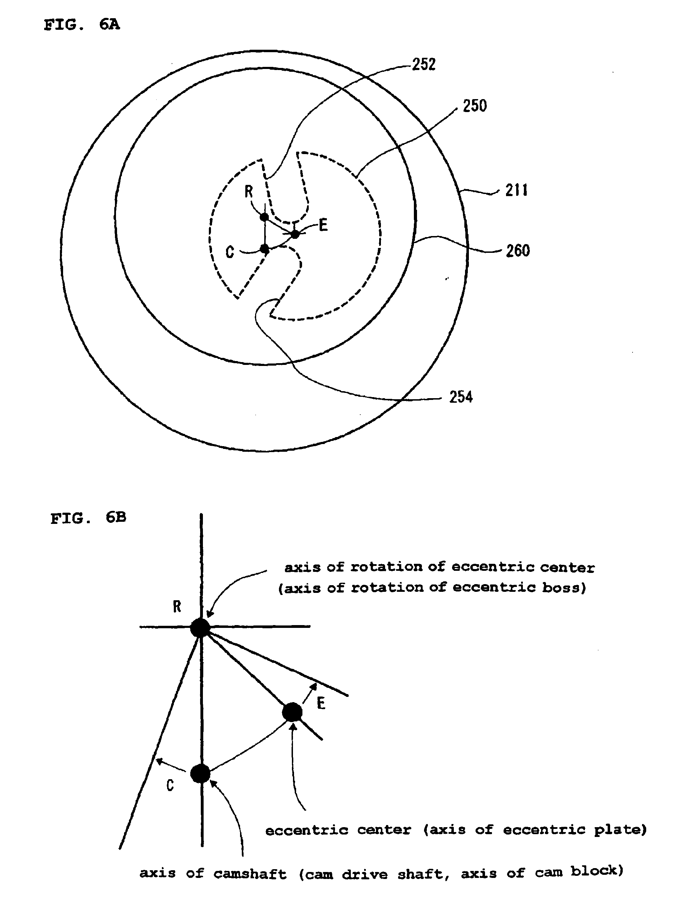

FIGS. 6A and 6B are schematic illustrations of the positional relationship of the axis of rotation R of the eccentric boss 260, the axis C of the cam sprocket 211 and the axis E of the eccentric plate 250. More specifically, FIG. 6A is a schematic front view of the eccentric boss 260, the cam sprocket 211 and the eccentric plate 250 and FIG. 6B is an enlarged view of the axis of rotation R, the centers C and E in FIG. 6A.

As shown in FIGS. 6A and 6B, the eccentric boss 260 is rotatably arranged in the head cover 105 and driven to rotate around the axis of rotation (the center of the boss) R by the eccentric motor 270 (see FIGS. 1 through 3). Note that the axis of rotation R is fixed to the engine side and operates also as the axis of rotation of the axis (eccentric axis) E relative to the axis of rotation (of the camshaft) C of the variable camshaft 230, the exhaust cam block 220 and the intake cam block 240.

Since the plate shaft section 258 (axis of rotation E of the eccentric plate 250) is rotatably received in the eccentric hole 262 of the eccentric boss 260, the axis (eccentric axis) E of the eccentric plate 250 is turned to draw a trajectory of an arc around the axis of rotation (the center of the boss) R as the eccentric boss 260 is driven to rotate. Additionally, the axis C of the variable camshaft 230 and hence the axis C of the exhaust cam block 220 and the intake cam block 240 are arranged on the moving line of the axis E.

As the eccentric boss 260 is driven to turn around the center of the boss R, the axis E of the eccentric plate 250 is displaced from the axis C of the variable camshaft 230 so that it is possible to produce a phase difference between the rotary motion of the exhaust cam block 220 that is integral with the cam sprocket 211 and the rotary motion of the intake cam block 240 that is integral with the variable camshaft 230.

As the eccentric boss 260 is driven to turn, it is possible to make the axis E agree with the axis C. Then, it is possible to fix the eccentric boss 260 to the position where the axis E and the axis C agree with each other and hence the position where the axis E of the eccentric hole 262 of the eccentric boss 260 overlaps the axis C of the variable camshaft 230. Then, as a result, it is possible to drive the eccentric plate 250 and the variable camshaft 230 to rotate around the same axis.

The rotary angular position of the eccentric boss 260 in the head cover 105 is detected by the angle sensors 26, 27 arranged on the eccentric boss 260 as shown in FIG. 2. The eccentric position of the eccentric hole 262 is controlled by a control section (not shown) so as to agree with a predefined position (which will be described in greater detail hereinafter) according to the information obtained on the detected angular position, the information obtained on the number of revolutions per unit time of the engine, the load of the engine and so on, the information input by the operator by way of an operation section (not shown) and other pieces of information.

Now, the operation of the variable valve drive device 200 of this embodiment will be described below.

Of the variable valve drive device 200 illustrated in FIGS. 1 through 3, the cam sprocket 211 is driven to rotate by the crankshaft 130 by way of the cam drive chain 133 at the number of revolutions per unit time that is a half of the number of revolutions per unit time of the crankshaft 130 as the crankshaft 130 rotates. Accordingly, the exhaust cam block 220 arranged integrally with the cam sprocket 211 is driven to rotate by way of the cylindrical part 224. In short, the rotary motion of the exhaust cam block 220 is synchronized with that of the crankshaft 130.

Additionally, as the cam sprocket 211 rotates, the drive pin 212 loosely engaged with the input side slot 252 of the eccentric plate 250 presses the eccentric plate 250 at the center of the plate shaft section 258 to drive the eccentric plate 250 to rotate.

Since the axis of rotation of the eccentric plate 250, or the position of the plate shaft section 258, is driven to become eccentric by the eccentricity motor 270, the eccentric plate 250 rotates at an irregular angular velocity when the cam sprocket 211 rotates at a uniform velocity.

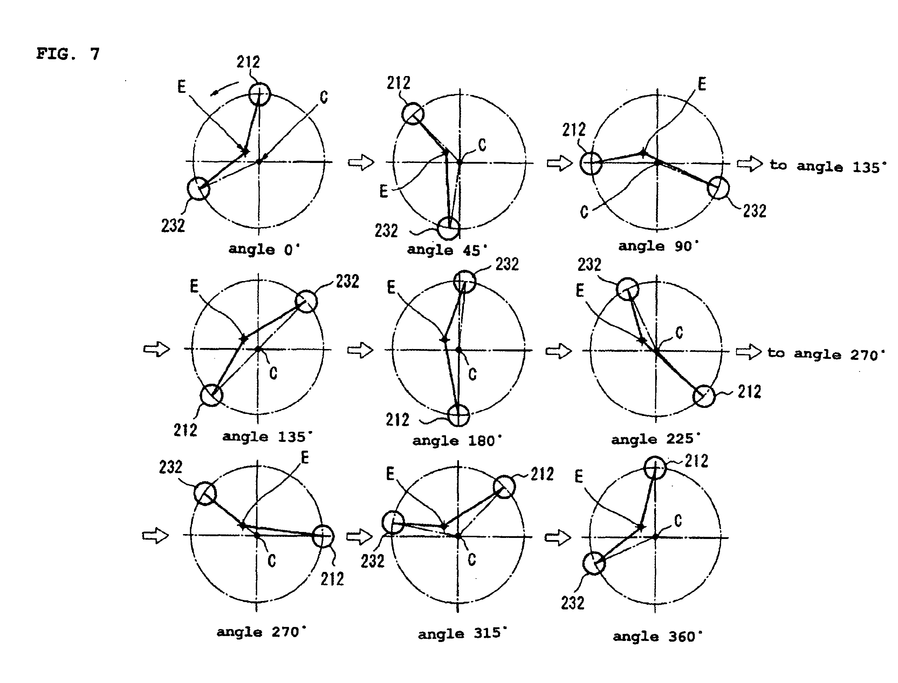

Now, the irregular angular velocity difference that is produced between the drive pin 212 and the driven pin 232 while the crankshaft 130 makes a full turn will be described below by referring to FIG. 7. FIG. 7 is an exemplary illustration of the positional relationship of the drive pin and the driven pin when the eccentric plate is eccentrically positioned relative to the camshaft of the variable valve drive device of this embodiment. More specifically, FIG. 7 shows the relative positional relationship between the drive pin 212 and the driven pin 232 when the crankshaft is rotated in the direction of the arrow in FIG. 7 at a predetermined rotation speed. In FIG. 7, the positional relationship between the drive pin 212 and the driven pin 232 is illustrated for the rotary angles of the crankshaft of 0° (top dead center), 45°, 90°, 135°, 180°, 225°, 270°, 315° and 360°.

Note that it is assumed here that the predetermined eccentric slot phase angle P formed by the input side slot 252 and the output side slot 254 (see FIGS. 1 and 3), which are loosely engaged with the drive pin 212 and the driven pin 232 respectively, is 155°.

The rotary motion of the drive pin 212 is synchronized with that of the exhaust cam block 220 (see FIGS. 1 through 3) and the rotary motion of the driven pine 232 is synchronized with that of the intake cam block 240. Since the exhaust valve and the intake valve are opened and closed by the rotary motion of the exhaust cam block 220 and that of the intake cam block 240 respectively, the rotary motion of the drive pin 212 and that of the driven pin 232 give rise to timings of opening and closing the respective valves.

Referring to FIG. 7, as the crankshaft is driven to rotate, the cam sprocket 211 of the variable valve drive device 200 is also driven to rotate in an interlocked manner and the drive pin 212 is then driven to rotate around the camshaft in synchronism with the rotary motion (in the direction of the arrow in FIG. 7).

As the drive pin 212 (exhaust cam block 220) rotates around the camshaft from the rotary angle of 0° to the rotary angle of 135°, the driven pin 232 (intake cam block 240) moves by an angle greater than the rotary angle of the drive pin 212 (or by a rotary angle of about 200° in FIG. 7). In other words, the driven pin 232 turns faster than the drive pin 212 in the above-described span. Note that the driven pin turns periodically at an irregular angular velocity while the drive pin 212 rotates from the rotary angle of 0° to the rotary angle of 135°. More specifically, the driven pin 232 turns by about 55° while the drive pin 212 rotates from the rotary angle of 0° to the rotary angle of 45°. Then, the driven pin 232 turns by about 80° while the drive pin 212 rotates from the rotary angle of 45° to the rotary angle of 90°. The driven pin 232 turns by about 65° while the drive pin 212 rotates from the rotary angle of 90° to the rotary angle of 135°.

On the other hand, as the drive pin 212 rotates from the rotary angle of 135° to the rotary angle of 360°, the driven pin 232 moves by an angle smaller than the rotary angle of the drive pin 212 (or by a rotary angle of about 160° in FIG. 7). In other words, the driven pin 232 turns slower than the drive pin 212 in the above-described span. More specifically, the driven pin 232 turns by about 40° while the drive pin 212 rotates from the rotary angle of 135° to the rotary angle of 180°. Then, the driven pin 232 turns by about 30° while the drive pin 212 rotates from the rotary angle of 180° to the rotary angle of 225°. The driven pin 232 turns by about 27° while the drive pin 212 rotates from the rotary angle of 225° to the rotary angle of 270°. The driven pin 232 turns by about 26° while the drive pin 212 rotates from the rotary angle of 270° to the rotary angle of 315°. The driven pin 232 turns by about 37° while the drive pin 212 rotates from the rotary angle of 315° to the rotary angle of 360°.

In the variable valve drive device 200 arranged as described above, when the drive pin 212 that is interlocked with the cam sprocket 211 is located at the side of the axis (axis of rotation) E of the eccentric plate 250 relative to the axis C of the cam sprocket 211, the distance between the center E of the eccentric plate 250 and the center of the drive pin 212 is smaller than the distance between the center of the cam sprocket 211 and the center of the drive pin. Thus, the rotary angle of the cam sprocket 211 is greater than the rotary angle of the eccentric plate 250.

When, on the other hand, the drive pin 212 is located at the other side and separated from the center of the eccentric plate 250 relative to the cam sprocket 211, the distance between the center of the eccentric plate 250 and the center of the drive pin 212 is greater than the distance between the center of the cam sprocket 211 and the center of the drive pin. Thus, the rotary angle of the eccentric plate 250 is smaller than the rotary angle of the cam sprocket 211.

The output side slot 254 formed in the plate main body section 256 of the eccentric plate 250 is forced to turn at an irregular angular velocity as the plate main body section 256 rotates. Since the driven pin 232 that is loosely engaged with the output side slot 254 is concentric with the cam sprocket 211 and the intake cam block 240, the irregular angular velocity turning motion of the output side slot 254 is transmitted to the driven pin 232. Then, the shaft part 230a turns at an irregular angular velocity by way of the driven pin 232 to which the irregular velocity turning motion is transmitted so that consequently the intake cam block 240 turns at an irregular angular velocity.

For instance, assume that the intake cam block 220 turns at an angular velocity greater than 1/2 of the angular velocity of the crankshaft when the crank angle is open for the intake cam block 240. Then, when the crank turns by the angle of action (e.g., 268°), the cam turns by an angle greater than the angle of action so that the intake valve is turned to become opened and closed quicker and the angle of action becomes smaller. On the other hand, a wide angle of action can be provided when the intake valve rotates slowly.

In this way, in the variable valve drive device 200, the rotary phase difference between exhaust cam block 220 that is integrally arranged with the cam sprocket 211 and the intake cam block 240 that is driven to rotate with the variable camshaft 230, which by turn is driven by way of the eccentric plate 250, periodically changes. Thus, the angle of action of the intake cam block 240 is made periodically variable. In other words, the intake cam block 240 turns at an irregular angular velocity and the angle of action and the opening and closing timings of the intake valve (variable valve) that is opened and closed as a result of the rotary motion of the intake cam block 240 are made variable.

The timing of driving the intake cam block 240 faster and that of driving the intake cam block 240 slower relative to the exhaust cam block 220 are determined by the positional relationship of the center of the eccentric plate 250, the cam nose and the slots 252, 254 relative to the center of the cam sprocket 211.

In the variable valve drive device 200 of this embodiment, the timing of closing the intake valve and that of opening it are defined separately by appropriately selecting the eccentric slot phase angle P (see FIG. 4) formed by the slots 252, 254.

Now, the selected position of the plate shaft section 258 that is the center of the eccentric plate 250 of the variable valve drive device 200 of this embodiment, or the predetermined eccentric slot phase angle P (see FIG. 4) of the eccentric plate 250, will be described below. The selected position of the plate shaft section 258 is substantially same as the position of the eccentric hole 262 due to the structure. Therefore, the position will be described in view of the layout for rotatably fitting the eccentric boss 260 having an eccentric hole 262 to the cylinder head 104.

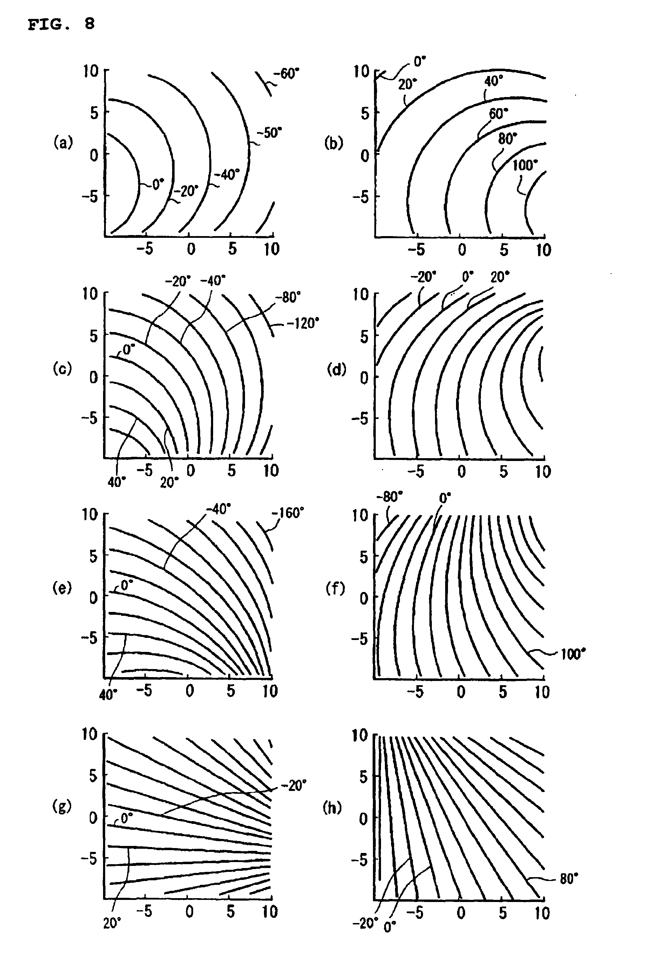

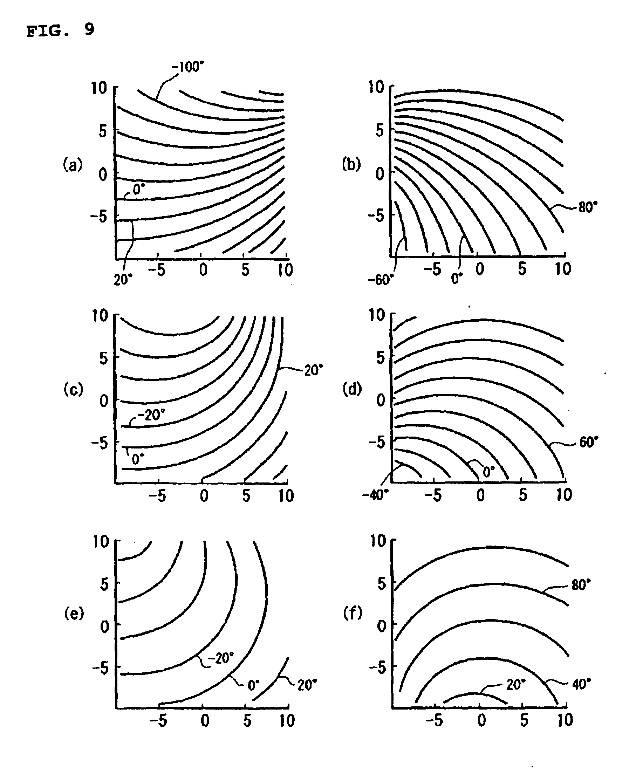

FIGS. 8 and 9 are schematic illustrations of the relationship of the timing of opening, the timing of closing the intake valve and the eccentric slot phase angle of the eccentric plate in the structure of the variable valve drive device 200 of this embodiment. Note that in FIGS. 8 and 9, the eccentric center, or the position of the plate shaft section 252 of the eccentric plate 250, is shown as the center (0, 0) for the position of the axis of rotation of the variable camshaft 230, the exhaust cam block 220 and the intake cam block 240 (axis C in FIG. 5).

Also note that, in (a) through (h) of FIG. 8 and (a) through (f) of FIG. 9, the timing of opening the valve corresponding to the eccentric center is expressed by the angle in the forward direction in the sense of rotation of the crankshaft and a line that corresponds to a constant angle is referred to as equal timing line. Thus, equal timing lines indicate respective timings of opening the valve that correspond to respective angles of action of the crankshaft. While equal timing lines can be drawn for any angles, the equal timing lines in (a) through (h) of FIG. 8 and (a) through (f) of FIG. 9 are drawn for every 20° only for the purpose of convenience.

Referring to FIGS. 8 and 9, firstly in FIG. 8, (a) shows the relationship between the timing of opening the intake valve and the eccentric position when the eccentric slot phase angle is 45° and (b) shows the relationship between the timing of closing the intake valve and the eccentric position when the eccentric slot phase angle is 45°.

Also in FIG. 8, (c) shows the relationship between the timing of opening the intake valve and the eccentric position when the eccentric slot phase angle is 90° and (d) shows the relationship between the timing of closing the intake valve and the eccentric position when the eccentric slot phase angle is 90°.

In FIG. 8, (e) shows the relationship between the timing of opening the intake valve and the eccentric position when the eccentric slot phase angle is 135° and (f) shows the relationship between the timing of closing the intake valve and the eccentric position when the eccentric slot phase angle is 135°. Finally, in FIG. 8, (g) shows the relationship between the timing of opening the intake valve and the eccentric position when the eccentric slot phase angle is 180° and (h) shows the relationship between the timing of closing the intake valve and the eccentric position when the eccentric slot phase angle is 180°.

Now, in FIG. 9, (a) shows the relationship between the timing of opening the intake valve and the eccentric position when the eccentric slot phase angle is 225° and (b) shows the relationship between the timing of closing the intake valve and the eccentric position when the eccentric slot phase angle is 225°.

Then, in FIG. 9, (c) shows the relationship between the timing of opening the intake valve and the eccentric position when the eccentric slot phase angle is 270° and (b) shows the relationship between the timing of closing the intake valve and the eccentric position when the eccentric slot phase angle is 270°. Finally, in FIG. 9, (e) shows the relationship between the timing of opening the intake valve and the eccentric position when the eccentric slot phase angle is 315° and (f) shows the relationship between the timing of closing the intake valve and the eccentric position when the eccentric slot phase angle is 315°.

As seen from FIGS. 8 and 9, the equal timing line is curved to a large extent (to show a large radius of curvature in absolute value) when the eccentric slot phase angle is close to 0° but comes close to a straight line when the eccentric slot phase angle is close to 180°. The quantity of timing change per unit moving distance (the intervals of the equal timing lines) around the unit eccentric center (the center E of the eccentric plate 250) is large (the intervals of the equal timing lines are reduced) when the eccentric slot phase angle is close to 180°.

Therefore, it is preferable that the eccentric slot phase angle is defined to be close to 180° in order to change the valve timing to a large extent in response to a small moving distance of the eccentric center E. However, with the arrangement of turning the eccentric center of the eccentric plate 250 by turning the eccentric boss 260, it is not possible to change the timing of opening and that of closing the valve independently when the eccentric slot phase angle is defined to be close to 180°.

Taking what is described above into consideration, in the variable valve drive device 200 of this embodiment, an angle other than 180° is selected for the eccentric slot phase angle and the valve timing is made to change to a large extent in response to a small moving distance of the eccentric center E, while a satisfactory degree of freedom is secured for defining the timings of opening and closing the valve.

Thus, it is necessary to define a required width for the change in the timing and an appropriate radius of gyration of the eccentric boss 260 from the viewpoint of the layout for rotating the eccentric boss 260 in the head cover 105 for the purpose of moving the position of the eccentric hole 262 when determining an appropriate range for the eccentric slot phase angle P.

Firstly, the required width for the change in the timing will be discussed below. The width for the change in the intake timing will be discussed in terms of the timing of opening and that of closing the intake valve. The required width for the change in the exhaust timing is similar to the width for the change in the intake timing and hence will not be described here any further.

The relationship between the overlap and the characteristics of the engine is observed for the timing of opening the intake valve, whereas the blown back quantity and the inertial supercharging effect are observed for the timing of closing the intake valve.

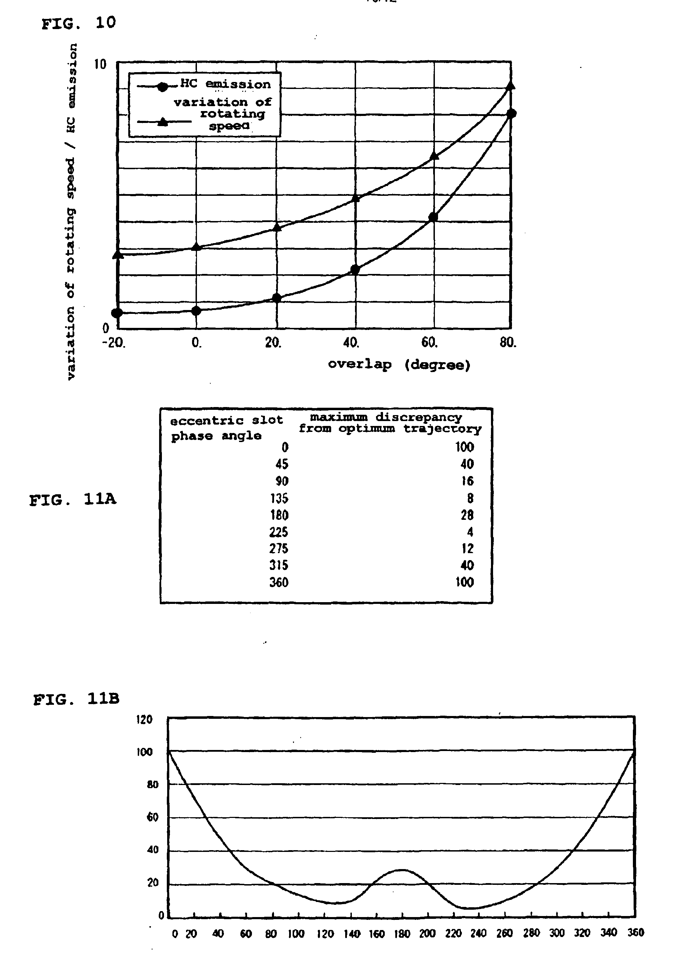

FIG. 10 is a graph illustrating the relationship of the overlap and the idling stability of an ordinary engine. In FIG. 10, the idling stability relative to the overlap is illustrated by a graph for the variation of rotating speed and a graph of the relationship between the overlap and the HC (hydrocarbon) emission is also shown.

As shown in FIG. 10, the idling stability falls as the overlap increases in an ordinary engine. Therefore, as shown in FIG. 10, it is appropriate to open the intake valve when the overlap is not higher than 20° and hence not higher than 10° before the top dead center of the crankshaft in order to secure a sufficient overlap and establish an appropriate degree of idling stability.

Additionally, as shown in FIG. 10, the HC emission increases in proportion to the overlap like the tendency of the idling stability. Therefore, the HC emission is reduced and preferable exhaust gas characteristics are obtained when the overlap is small.

On the other hand, it is known that, when the overlap is increased, the exhaust pulsation of the engine can be effectively utilized for the initial stages of the intake stroke of the engine and then, as a result, the fresh air intake is increased to improve the volumetric efficiency. Thus, consequently, it is possible to increase the output torque of the engine. The appropriate overlap for improving the engine output is maximally about 80° and the timing of opening the intake valve is preferably made to show a variable width of -40° to 0° relative to that amount.

To the contrary, the timing of closing the intake valve is generally determined by considering the inertia effect of air intake and the inertia effect of air intake can be exploited maximally by closing the valve late for high speed resolutions and early for low speed revolutions. Thus, for the ordinary range of the number of revolutions per unit time of engines, the timing of closing the intake valve is defined to be about 0° to 70° after the bottom dead center of the crankshaft.

In view of the above-described facts, the valve timing that is effective for exhaust gas and the engine output is obtained by means of a control technique as described below. With this control technique, the timing of opening the valve is determined by holding the overlap that is minimal, whereas the timing of closing the valve is determined at a point near the bottom dead center of the crankshaft in a range where the number of revolutions per unit time of the engine is small. Then, the timing of closing the valve is gradually delayed as the number of revolutions per unit time of the engine, while maintaining the fixed timing of opening the valve. Subsequently, as the range for effectively utilizing the exhaust pulsation (the range where the number of revolutions per unit time of the engine is high) is reached for the engine, the timing of opening the valve is advanced and, at the same time, the timing of closing the valve is delayed.

Thus, to obtain a valve timing that is effective for exhaust gas and the engine output, an optimal opening timing and an optimal closing timing that are determined by controlling the operations of opening and closing the valve are plotted on the equal timing lines shown in FIGS. 8 and 9. The opening timing diagram and the closing timing diagram obtained as a result of plotting are then laid one on the other to determine the point that satisfies the both requirements. Then, the determined points are plotted to obtain the most desirable trajectory of the axis of the eccentric plate 250 for exhaust gas and the engine output.

On the other hand, the axis E of the eccentric plate 250 of the variable valve drive device 200 of this embodiment rotates and moves around a point fixed to the engine, which is the axis of rotation R of the eccentric boss 260. Therefore, with the variable valve drive device 200 of this embodiment, it is possible to realize a variable valve timing with a simple arrangement.

With this layout, the axis of the eccentric plate 250 moves along a circle having a radius of the axis of the eccentric plate whose upper limit is defined by the radius of the opening of the head cover 105. Therefore, the circle shows a discrepancy from the most desirably trajectory of gyration of the eccentric plate 250 determined above from the viewpoint of exhaust gas and the engine output.

FIGS. 11A and 11B are schematic illustrations of the axis of rotation located at the center of the eccentric plate 250 and the amount of discrepancy of the radius of gyration thereof. FIG. 11A is a graph obtained by determining the axis of rotation located at the center of the eccentric plate 250 and its radius so as to minimize the discrepancy for each eccentric slot phase angle (corresponding to the axis of rotation of the eccentric boss 260) and plotting the largest discrepancies.

FIG. 11B illustrates data that show the actually plotted eccentric slot phase angles and the largest discrepancies from the optimum trajectory. It is known that the largest discrepancy is required to be not greater than 20° from the viewpoint of exhaust gas and the engine output.

Thus, in the variable valve drive device 200 of this embodiment, the eccentric slot phase angle P is defined to be between 80° and 160° or between 200° and 290° by taking this into consideration and referring to FIGS. 11A and 11B.

With the variable valve drive device 200 of this embodiment having the above-described arrangement, it is possible to drive the intake cam block 240 under the condition of showing a periodic rotary phase difference relative to the exhaust cam block 220 and appropriately shift the rotary phase difference so that it is possible to make the amount of valve overlap (period of overlap) variable as a function of the engine stroke.

More specifically, as shown in FIGS. 8 and 9, the amount of valve overlap can be adjusted by defining the eccentric slot phase angle P to be other than 180° and then defining the timing of opening the intake valve and that of closing the intake valve independently.

Thus, it is possible to minimize the intrusion of residual gas and stabilize the combustion of gas when the engine is operating in an idling mode by controlling the overlap and opening and closing the valve early by means of the intake cam block 240 to reduce or get rid of the overlap.

Additionally, it is possible to reduce the scavenging and the blowing back of residual gas due to the effect of exhaust pulsation and improve the idling stability and the actuation by improving the intake effect of mixture gas and taking in a sufficient amount of mixture gas.

Furthermore, it is possible to prevent blowing, reduce exhaust gas and improve the fuel consumption rate by raising the engine output in a low range of the number of revolutions per unit time.

Particularly, when the engine is driven to operate at a small number of revolutions per unit time, it is possible to drive the intake cam block 240 and hence the driven pin 232 to rotate so as to make the intake valve become fully close when the piston 102 is located at the bottom dead center.

When the engine is driven with a medium number of revolutions per unit time (in a medium load range), it is possible to improve the combustion efficiency by widely opening the intake valve early to increase the valve overlap and reduce the pumping loss so as to improve the fuel consumption rate. Similarly, when the engine is driven with a large number of revolutions per unit time, it is possible to select a valve overlap that matches the number of revolutions per unit time of the engine so as to improve the fuel consumption rate.

In the variable valve drive device 200 of this embodiment, the center of the eccentric plate 250 is made to rotate and move around a single fixed point of the engine (the axis of rotation of the eccentric boss 260). In other words, the eccentric center position is made to move with a simple arrangement in order to realize variable valve timing. More specifically, in the variable valve drive device 200 of this embodiment, the eccentric boss 260 supports the plate shaft section 258 of the eccentric plate 250 and the plate shaft section 258 can rotate and move around the center of the opening of the head cover 105 fitted to the eccentric boss 260.

With the variable valve drive device 200 equipped with the eccentric boss 260, it is not necessary to provide the support structure of the plate shaft section 258 of the eccentric plate 250 and the structure for moving the plate shaft section 258 separately so that the overall arrangement is made very simple. Thus, as a result, unlike conventional device, the variable valve drive device 200 itself can be controlled with ease and the manufactured at low cost and the maintenance and the reliability of the device are improved. Additionally, the outer diameter of the eccentric boss 260 (the boss main body section 264) is made smaller than that of the cam sprocket 211 and arranged in the inside of the outer diameter of the cam sprocket 211 in a direction orthogonal relative to the axis of rotation of the eccentric boss 260. Thus, the engine 100 equipped with the variable valve drive device 200 is only dimensionally larger in the direction of the axis of the camshaft and does not protrude in any directions perpendicular to the axis of the camshaft if compared with engines that are not equipped with an eccentric boss 260.

Since the eccentric slot phase angle P of the eccentric plate 250 of the variable valve drive device 200 of this embodiment is between 80° and 160° or between 200° and 290°, the equal timing lines for opening and closing the valve substantially form an arc (see FIGS. 8 and 9).

As the eccentric slot phase angle P of the eccentric plate 250 of the variable valve drive device 200 of this embodiment is between 80° and 160° or between 200° and 290°, it is possible to provide various curved timing lines unlike conventional structures with a fixed phase angle of 180°.

Thus, for the arrangement of moving the center of the eccentric plate 250 in the inside of the head cover 105 by means of the eccentric boss 260, it is possible to make various curved timing lines correspond to the trajectory of an arc of the center of the eccentric plate 250. Then, as a result, in the engine 100, the variable valve drive device 200 can improve the efficiency for optimizing the valve timing so that it can meet the demands of various engines and provide a broad scope of freedom for defining various parameters that match the required characteristics of the engine.

Therefore, if it is required to shift the timing of opening or closing the intake valve or the exhaust valve, while substantially fixing the timing of closing or opening the valve, whichever appropriate, it is possible to place the axis of rotation R of the eccentric boss 260 (see FIG. 6) near the center of the arc-shaped constant line of the timing of opening the valve. Then, as a result, it is possible to shift the timing of opening or closing the intake valve or the exhaust valve, while substantially fixing the timing of closing or opening the valve, which ever appropriate.

In this way, a variable valve mechanism adapted to change the timing of opening and that of closing the valve under a condition that the cylinder head 104 is closed is realized in the variable valve drive device 200 of this embodiment by way of a compact structure as the timing of opening and that of closing the valve is shifted by means of the eccentric boss 260 that is rigidly fitted to the cylinder head 104.

Additionally, in the variable valve drive device 200 having the above-described configuration, the positional relationship between the exhaust cam block 220 and the intake cam block 240 and the cam sprocket 211 on the axial line of the cam is same as that of conventional camshafts having no variable valve drive mechanism, or so-called variable valve timing mechanism. Therefore, the engine of a conventional motorcycle that is not equipped with a variable valve drive mechanism, for example, the engine of a scooter type motorcycle, can be used as an engine equipped with a variable valve drive feature only by replacing the camshaft with a camshaft equipped with a variable valve drive device 200 of this embodiment.

More specifically, the members for driving the camshaft including the crankshaft, the cylinder section and the cylinder head of the engine main body and the timing gear do not need to be altered in terms of dimensions and positions.

While the engine 100 is a 1-cylindered SOHC (single over head camshaft) type engine in the above description of this embodiment, it may alternatively be a multiple-cylindered SOHC type engine or a multiple-cylindered DOHC (double over head camshaft) type engine.

While the rotary phase difference of the intake cam block 240 periodically changes relative to the exhaust cam block 220 for the purpose of making the angle of action of the intake valve variable, in the variable valve drive device 200 of this embodiment, the present invention is by no means limited thereto. In other words, it may be so arranged that the rotary phase difference of the exhaust cam block 220 periodically changes relative to the intake cam block 240.

In such a case, the variable valve drive device 200 is equipped with an intake cam block for driving the intake valve by rotating integrally with the cam sprocket 211 and the variable camshaft 230 is equipped with an exhaust camblock for driving the exhaust valve. With this arrangement, it is possible to change the overlap by making the angle of action of the exhaust valve variable to provide effects and advantages similar to those described above. More specifically, it is possible to define the timing of opening and that of closing the exhaust valve that provide factors for forming the angle of action of the exhaust valve separately as in the case of the timing of opening and that of closing the intake valve.

Now, a vehicle mounted by an engine 100 that is equipped with a variable valve drive device 200 according to the present invention will be described below.

While the vehicle mounted by the engine 100 is a scooter type motorcycle in the following description, the present invention is by no means limited thereto and the present invention is applicable to any vehicle that is mounted by such an engine 100.

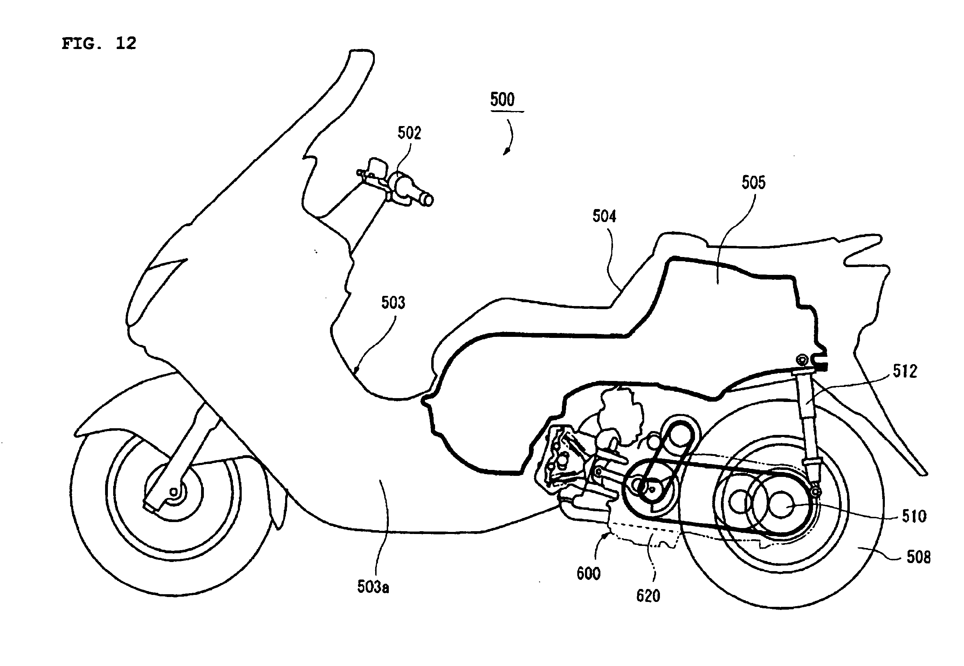

FIG. 12 is a schematic lateral cross sectional view of a motorcycle equipped with a variable valve drive device of an engine according to an embodiment of the present invention, showing a principal configuration thereof. In the following description of the embodiment, the expressions of forward, backward, left and right refers to those as viewed from the rider riding on the sheet of the motorcycle. While the embodiment of motorcycle is described herein as scooter type motorcycle, the present invention is by no means limited thereto and applicable to any vehicle having an engine equipped with a variable valve drive device.

The motorcycle 500 of FIG. 12 is a tandem scooter type motorcycle that comprises a vehicle main body 503 that supports a handle 502 at the front side thereof so as to allow it to turn and a tandem sheet 504 arranged behind the main body 503. The tandem sheet 504 is fitted to the main body 503 so as to be turned up and down to open and close the trunk space 505 arranged below it. A drive unit 600 is arranged below the trunk space 505.

The front end of the drive unit 600 is fitted to the rear end of the front side main body 503a that extends from below the handle 502 to below the tandem sheet 504 by way of a pivot (not shown) that is arranged transversally and horizontally so as to be upwardly and downwardly movable.

The rear wheel 508 of the motorcycle 500 is fitted to the rear end of the drive unit 600 by way of an axle 510 and rear suspension 512 is arranged between the rear end of the axle 510 and the frame pivot supporting the rear end of the trunk space 505. The front end of the trunk space 505 is located upward and frontward relative to the front end of the drive unit 600.

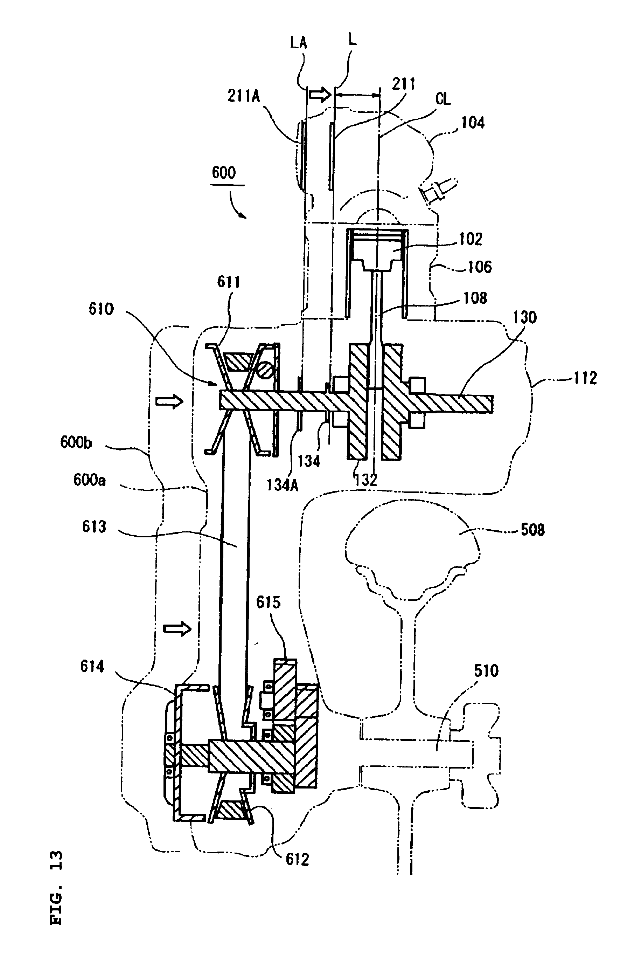

FIG. 13 is a schematic plan view of a principal part of the drive unit of FIG. 12.

As shown in FIG. 13, the engine 100 of the drive unit 600 is mounted in a front part of the vehicle and the drive force of the engine 100 is transmitted to the axle 510 arranged rearward relative to the drive unit 600 by way of a CVT mechanism section 610 so as to drive the axle 510 and hence the rear wheel 508 to rotate.

The engine 100 is arranged substantially at the longitudinal center of the vehicle below the trunk space 505 with the axial line of its cylinder section 106 held substantially horizontally and its crankshaft 130 held substantially in parallel with the transversal direction of the vehicle.

The CVT mechanism section 610 is arranged at the other end of the crankshaft 130, or the left end of the vehicle, to extend backwardly. The CVT mechanism section 610 is arranged in parallel with the cylinder shaft and includes a pulley 611 fitted to the crankshaft 130, another pulley 612 fitted to the axle 510, a belt 613 wound around the pulleys 611, 612 and a centrifugal clutch 614.

The centrifugal clutch 614 is fitted to the axle 510. A reduction gear 615 is fitted to the axle 510 to reduce the drive force of the crankshaft 130 transmitted to it by way of the pulley 611 and the belt 613.

Motorcycles may be forced to be equipped with a variable valve timing mechanism due to restrictions on emission of exhaust gas. Therefore, it is desirable that engines of scooter type vehicles (to be referred to simply as "scooters" hereinafter) have a simplified structure because of the limitations on the dimensions of such vehicles.

In the engine 100 of this embodiment, the eccentric plate 250, or an eccentric member, is not arranged between the cam drive member 210, which corresponds to the cam drive shaft of a conventional engine, and the exhaust and intake cam blocks 220, 240 disposed above the cylinder section 106.

In the engine 100, the eccentric plate 250 and the exhaust and intake cam blocks 220, 240 are arranged on the cam axial line with the cam drive member 210 interposed between them.

In other words, the eccentric plate 250 and the exhaust and intake cam blocks 220, 240 are arranged on the cam axial line with the cam sprocket 211 interposed between them. The cam sprocket 211 is arranged on the chain line of the cam drive chain 133.

From the viewpoint of the structure of the engine, the exhaust and intake cam blocks 220, 240 are arranged along the cylinder shaft line CL above the cylinder section 106. Thus, unlike conventional motors, the cylinder shaft line and the cam chain line are arranged side by side.

For this reason, as shown in FIG. 13, the chain line L of the engine 100 is located at a position close to the cylinder shaft line CL if compared with the chain line LA of a conventional engine where the eccentric member is arranged between the cam sprocket 211 and the exhaust and intake cam blocks 220, 240.

As a result of this arrangement, the belt line of the belt 613 of the CVT mechanism section 610 arranged at the outside and in parallel with the chain line L is located close to the cylinder shaft line CL if compared with the belt line of a conventional engine.

Thus, the transversal dimension of the drive unit 600 is reduced. More specifically, the left end facet 600a of the drive unit 600 is brought close to the right end facet if compared with the left end facet 600b of a conventional engine that is equipped with a variable valve drive device because chain line L is arranged close to the cylinder shaft line CL of the drive unit 600.

For structural reasons, a scooter type motorcycle 500 has parts such as the sieve for the CVT (continuously variable transmission) that are arranged on the crankshaft and outside relative to the cam drive chain 133.

The engine 100 mounted in such a motorcycle 500 is not provided with members for variable valve drive between the chain line L of the cam drive chain 133 and the cylinder shaft line CL. Therefore, it is not necessary to provide a space on the crankshaft 130 for those members so that the cam sprocket 211 and the cam blocks 220, 240 are not separated by a large distance if compared with conventional engines equipped with a variable valve timing mechanism.

In other words, the chain line L of the cam drive chain 133 that is arranged substantially orthogonally relative to the crankshaft 130 is not separated significantly from the cylinder shaft line CL.

Thus, as a result, the crank case 112 of the motorcycle 500 has a width same as the one that is not mounted with a variable valve timing mechanism.

Therefore, it is possible to secure a sufficient angle of bank for the motorcycle 500 to prevent degradation of the kinetic characteristics of the vehicle. Then, the vehicle can move satisfactorily.

Additionally, the eccentric mechanism parts of the variable valve drive device 200 such as the eccentric plate 250 are not arranged between the exhaust and intake cam blocks 220, 240 and the cam sprocket 211.

Therefore, the engine 100 that is equipped with the variable valve drive device 200 has member substantially same as engines that are not equipped with a variable valve drive device except the variable valve drive device 200. In other words, the engine 100 can be used as conventional engine only by removing the variable valve drive device 200 from the cylinder head 104 of the engine main body section 110 and replacing the eccentric plate 250, the variable camshaft 230, the eccentric boss 260 and the head cover 105.

Thus, when the engine 100 is mounted on a motorcycle to replace a conventional engine, it is not required to modify the structure to a large extent. In other words, main engine components such as cylinder head can be used commonly for the engine 100 and the conventional engine.

Additionally, since the eccentric mechanisms such as the eccentric plate are not arranged between the cam sprocket and the camshaft of the engine, the bending strength of the crank is not reduced, although it may be reduced if the cam sprocket is separated from the cylinder shaft.

Additionally, unlike an arrangement for moving the cam drive shaft in the axial direction, the overlap period can be made variable with a simple arrangement.

A variable valve drive device according to a first aspect of the present invention comprises a cam drive member adapted to be driven to rotate by the drive force transmitted from a crankshaft, an eccentric member adapted to be driven to rotate around an axis of rotation running in a direction same as the rotary shaft of the cam drive member, the axis being movable from a concentric position on the rotary shaft to an eccentric position, a camshaft arranged concentrically on the rotary shaft and adapted to be driven to rotate around the rotary shaft by the eccentric member with a rotary phase difference changing periodically relative to the cam drive member when it is driven by the eccentric member at the eccentric position and a cam block adapted to be driven to rotate by the camshaft with a rotational phase same with the camshaft and drive an exhaust valve or an intake valve. The eccentric member includes an input connection section connected to the cam drive member to receive as input the rotary force of the cam drive member and an output connection section connected to the camshaft to output the rotary force of the eccentric member itself driven to rotate by the rotary force input by way of the input connection section to the camshaft and the timing of opening the exhaust valve or the intake valve as a function of the shift of the axis of rotation of the eccentric member in a direction is angularly unequivocally advanced and/or the timing of closing the exhaust valve or the intake valve is angularly unequivocally delayed for the phase angle of the input connection section and that of the output connection section relative to the axis of the eccentric member.

With the arrangement as defined above, as the eccentric member is driven by the cam drive member to rotate and driven at an eccentric position relative to the axis of rotation of the cam drive member, the camshaft is driven to rotate with a rotary phase difference that periodically changes relative to the cam drive member.

The cam block that rotates with a rotary phase same as that of the camshaft is driven with a rotary phase difference that periodically changes relative to the cam drive member. In other words, the angle of action of the cam block is made variable to drive the exhaust valve or the intake valve and the angle of action of the exhaust valve or the intake valve, whichever appropriate, is made variable.

The phase angle of the input connection section or the output connection section of the eccentric member relative to the axis of the eccentric member is defined to be between 80° and 160° or between 200° and 290° when the direction in which the eccentric member rotates is assumed to be the forward direction. Thus, the line that makes the timing of opening and that of closing the valve constant shows an arc-shaped curve and the line of the timing of opening and that of the timing of closing intersect each other at a plurality of points to provide an increased degree of freedom for selecting the timing of opening and that of closing.

Thus, it is possible to arbitrarily select the timing of opening and that of closing for forming the angle of action of the exhaust valve or the intake valve.

Therefore, as the angle of action of the cam is made variable with a simple and low cost structure, it is possible to make the angle of action of the exhaust valve or the intake valve variable to by turn make the valve overlap variable by selecting an optimum valve timing for both the opening side and the closing side.

Preferably, a variable valve drive device according to a second aspect of the present invention as defined above comprises an eccentricity moving section for moving the axis of the eccentric member from a concentric position to an eccentric position relative to the axis of rotation of the cam drive member.

With this arrangement, since a variable valve drive device comprises an eccentricity moving section for moving the axis of eccentric member from a concentric position to an eccentric position relative to the axis of rotation of the cam drive member, it is possible to periodically change the rotary phase difference of the cam drive member and the cam block so as to make the angle of action of the exhaust valve or the intake valve variable.

Preferably, in a variable valve drive device according to a third aspect of the present invention as defined above, the eccentricity moving section is adapted to move the axis of the eccentric member along an arc line.

With this arrangement, since the eccentricity moving section is adapted to move the axis of the eccentric member along an arc line, various opening and closing timings can be made to adapt themselves to an arc-shaped constant timing line with ease. Then, it is possible to improve the efficiency of optimizing the valve timing so that the requirements of various engines can be met and parameters can be defined according to the required characteristics of the engine.

Preferably, a variable valve drive device according to a fourth aspect of the present invention as defined above comprises another cam block that is driven to rotate by the cam drive member with a rotary phase same as the cam drive member and arranged at a position adjacent to the cam block.

With this arrangement, since the variable valve drive device further comprises another cam block that is driven to rotate by the cam drive member with a rotary phase same as the cam drive member, one of the cam blocks may be used as intake cam block for driving the intake valve while the other may be used as exhaust cam block for driving the exhaust valve. Then, as a result, it is possible to mount the variable valve drive device on an SOHC type engine where the intake valve and the exhaust valve are arranged on a same camshaft with ease to by turn raise the degree of freedom of selecting a variable valve mechanism.

Preferably, in a variable valve drive device according to a fifth aspect of the present invention as defined above, the cam block drives the intake valve by revolutions while the other cam block drives the exhaust valve by revolutions.

With this arrangement, since the cam block drives the intake valve by revolutions while the other cam block drives the exhaust valve by revolutions, it is possible to arbitrarily change the timing of opening and that of closing the intake valve relative to the angle of action of the exhaust valve. Then, it is possible to make the angle of action variable in a desired manner. As a result, it is possible to produce a large overlap by prolonging the open period of the intake valve when the engine is driven to operate as a low angular velocity so that the performance of the engine can be secured for high angular velocity operations without sacrificing the output performance for low angular velocity operations.

In a sixth aspect of the present invention, an engine is equipped with a variable valve drive device as defined above and the crankshaft is arranged substantially in parallel with the axis of rotation of the cam drive member and the cam drive member is interlocked with the revolutions of the crankshaft by way of a drive force transmission section arranged orthogonally relative to the crankshaft.

With this arrangement, when the eccentric member is driven to rotate by the cam drive member at a position eccentric relative to the axis of rotation of the cam drive member, the camshaft rotates with a rotary phase difference that periodically changes relative to the cam drive member. Then, the rotary phase difference of the cam block which rotates with a rotary phase same as the camshaft periodically changes relative to the cam drive member. In other words, the angle of action of the cam block is made variable so that consequently the exhaust valve or the intake valve is driven and the angle of action of the exhaust valve or that of the intake valve, whichever appropriate, is made variable.

The phase angle of the input connection section or the output connection section of the eccentric member relative to the axis of the eccentric member is defined to be between 80° and 160° or between 200° and 290° when the direction in which the eccentric member rotates is assumed to be the forward direction. Thus, the line that makes the timing of opening and that of closing the valve constant shows an arc-shaped curve and the line of the timing of opening and that of the timing of closing intersect each other at a plurality of points to provide an increased degree of freedom for selecting the timing of opening and that of closing. Thus, it is possible to arbitrarily select the timing of opening and that of closing for forming the angle of action of the exhaust valve or the intake valve.

Therefore, as the angle of action of the cam is made variable with a simple and low cost structure, it is possible to make the angle of action of the exhaust valve or the intake valve variable to by turn make the valve overlap variable by selecting an optimum valve timing for both the opening side and the closing side.

In a seventh aspect of the present invention, in a motorcycle, an engine as defined above is mounted thereon with the crankshaft arranged transversally.

With this arrangement, it is possible to realize a motorcycle that provides advantages same as those of the above defined engine.

### Industrial Applicability

A variable valve drive device, an engine and a motorcycle according to the present invention provide an advantage of making the angle of action of a cam variable with a simple configuration without significantly change the configuration of the engine.

## Claims

1. A variable valve drive device comprising:
a cam drive member adapted to be driven to rotate by the drive force transmitted from a crankshaft;
an eccentric member adapted to be driven to rotate around an axis of rotation running in a direction same as the rotary shaft of the cam drive member, by operation of the cam drive member, the axis being movable from a concentric position on the rotary shaft to an eccentric position;
a camshaft arranged concentrically on the rotary shaft and adapted to be driven to rotate around the rotary shaft by the eccentric member with a rotary phase difference changing periodically relative to the cam drive member when it is driven by the eccentric member at the eccentric position; and
a cam block adapted to be driven to rotate by the camshaft with a rotational phase same with the camshaft and drive an exhaust valve or an intake valve, the device **characterized in that**
the eccentric member includes:
an input connection section connected to the cam drive member to receive as input the rotary force of the cam drive member; and
an output connection section connected to the camshaft to output the rotary force of the eccentric member itself driven to rotate by the rotary force input by way of the input connection section, and
the timing of opening the exhaust valve or the intake valve as a function of the shift of the axis of rotation of the eccentric member in a direction is angularly unequivocally advanced and/or the timing of closing the exhaust valve or the intake valve is angularly unequivocally delayed for the phase angle of the input connection section and that of the output connection section relative to the axis of the eccentric member.

2. The variable valve drive device according to claim 1, **characterized by** comprising an eccentricity moving section for moving the axis of the eccentric member from a concentric position to an eccentric position relative to the axis of rotation of the cam drive member.

3. The variable valve drive device according to claim 2, **characterized in that** the eccentricity moving section is adapted to move the axis of the eccentric member along an arc line.

4. The variable valve drive device according to claim 1, **characterized by** comprising another cam block that is driven to rotate by the cam drive member with a rotary phase same as the cam drive member and arranged at a position adjacent to the cam block.

5. The variable valve drive device according to claim 4, **characterized in that** the cam block drives the intake valve by revolutions while the other cam block drives the exhaust valve by revolutions.

6. An engine **characterized in that** the engine is equipped with a variable valve drive device according to claim 1 and that the crankshaft is arranged substantially in parallel with the axis of rotation of the cam drive member and the cam drive member is interlocked with the revolutions of the crankshaft by way of a drive force transmission section arranged orthogonally relative to the crankshaft.

7. A motorcycle **characterized in that** an engine according to claim 6 is mounted thereon with the crankshaft arranged transversally.
